(19) Europäisches Patentamt
European Patent Office
Office européen des brevets

(11) **EP 3 801 142 B1**

(12) **FASCICULE DE BREVET EUROPEEN**

(45) Date de publication et mention de la délivrance du brevet:
**04.01.2023 Bulletin 2023/01**

(21) Numéro de dépôt: **19724524.4**

(22) Date de dépôt: **21.05.2019**

(51) Classification Internationale des Brevets (IPC):
***A47G 19/22*** *(2006.01)*

(52) Classification Coopérative des Brevets (CPC):
**A47G 19/2233**

(86) Numéro de dépôt international:
**PCT/EP2019/063066**

(87) Numéro de publication internationale:
**WO 2019/224183 (28.11.2019 Gazette 2019/48)**

(54) **RECIPIENT A ACTION EFFERVESCENTE**

BEHÄLTER MIT BRAUSEWIRKUNG

CONTAINER WITH EFFERVESCENT ACTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.05.2018 FR 1854421**

(43) Date de publication de la demande:
**14.04.2021 Bulletin 2021/15**

(73) Titulaire: **Arc France**
**62510 Arques (FR)**

(72) Inventeurs:
• **DONZE, Sébastien**
**62510 Arques (FR)**
• **GARNIER, Yvan**
**62510 Arques (FR)**
• **DEBOUT, Emilie**
**62510 Arques (FR)**

(74) Mandataire: **Cabinet Netter**
**36, avenue Hoche**
**75008 Paris (FR)**

(56) Documents cités:
**FR-A1- 3 008 295**

## Description

L'invention relève du domaine des récipients pour liquide, et plus particulièrement des articles de gobeleterie.

Lors de la fabrication de récipients pour boissons tels que des gobelets en verre, les surfaces créées sont généralement rendues les plus lisses possibles, notamment pour leur conférer une bonne transparence et pour des raisons esthétiques.

Le service d'une boisson gazeuse dans un récipient génère des phénomènes effervescents, ou du bullage, et l'accumulation de mousse à la surface. Pour le service de la bière ou du vin mousseux par exemple, il est souhaitable de générer et d'entretenir de l'effervescence. Les zones de genèse des bulles dans un verre sont appelées sites de nucléation.

Il a été constaté que la présence d'irrégularités dans les surfaces de récipient au contact de boisson gazeuse favorise l'apparition de bulles à partir du gaz dissous dans ladite boisson gazeuse. Pour favoriser le bullage, des surfaces intérieures présentant un relief rugueux ont donc été créées dans des contenants. Lors du remplissage du contenant avec un liquide carbonaté tel qu'une boisson gazeuse, des anfractuosités de la surface intérieure emprisonnent des poches d'air. Les interfaces entre le liquide et les poches d'air permettent de meilleurs échanges gazeux. Les anfractuosités forment alors des zones de nucléation.

Le brevet européen EP 0 703 743 au nom de Charles Glassware décrit un procédé d'apport de matière sur une surface pour créer des sites de nucléation et améliorer le bullage. Il a été parfois constaté un brunissement du fond du verre. La demande de brevet FR 2 531 891 décrit un procédé d'ablation de matière favorisant l'apparition de zone de dégagement gazeux. Des exemples d'application sont donnés dans la demande internationale WO 2010/048488.

Le brevet FR 3 008 295 propose de créer des sites de nucléation à l'intérieur d'un récipient pour boisson par des irrégularités de surface dans une région choisie du récipient sur laquelle on dépose ensuite une couche hydrophobe sur la région choisie.

La demande FR n°1753464 sera publiée postérieurement à la date de dépôt de la présente.

La Demanderesse a identifié le besoin d'améliorer encore la qualité du bullage afin de satisfaire des marchés plus larges avec des types de bière à faible taux d'alcool et/ou à faible taux de gaz carbonique dissous. La qualité du bullage englobe la constance du bullage et donc la reproductibilité de la fabrication du récipient. Une fabrication aisée a été recherchée.

Le Pr. Liger-Belair et son équipe de l'UMR CNRS 7331 - Université de Reims Champagne-Ardenne ont publié sur l'effervescence :

Liger-Belair, G. "The physics behind the fizz in champagne and sparkling wines" European Physical Journal: Special Topics 201, 1-88, 2012.

Liger-Belair, G. "La physique des bulles de champagne" Annales de Physique (Paris) 27 (4), 1-106, 2002.

Liger-Belair, G.; Conreux, A.; Villaume, S.; Cilindre, C. "Monitoring the losses of dissolved carbon dioxide from laser-etched champagne glasses" Food Research International, 54, 516-522, 2013.

Liger-Belair, G.; Voisin, C.; Jeandet, P. "Modeling non-classical heterogeneous bubble nucleation from cellulose fibers: Application to bubbling in carbonated beverages" Journal of Physical Chemistry B 109, 14573-14580, 2005.

Liger-Belair, G.; Parmentier, M.; Jeandet, P. "Modeling the kinetics of bubble nucleation in champagne and carbonated beverages" Journal of Physical Chemistry B 110, 21145-21151, 2006.

Liger-Belair, G. "How many bubbles in your glass of bubbly?" Journal of Physical Chemistry B 118, 3156-3163, 2014.

Liger-Belair, G.; Bourget, M.; Villaume, S.; Jeandet, P.; Pron, H.; Polidori, G. "On the losses of dissolved $CO_2$ during champagne serving" Journal of Agricultural and Food Chemistry 58, 8768-8775, 2010.

Il est souhaitable de disposer d'un récipient de consommation de bière assurant un bullage satisfaisant pour un grand nombre de types de bière qu'il pourrait contenir, et stable au cours des utilisations du récipient, que le récipient soit sec, ou humide, notamment en sortie de lave-verres ou lors d'un second remplissage, avec obtention d'un bullage équivalent.

L'invention vient améliorer la situation, notamment par rapport aux deux derniers brevets précités de la Demanderesse.

L'invention de la Demanderesse selon la revendication 1 propose un récipient à base de verre ou de grès pour boisson présentant des irrégularités de surface dans une région choisie. Les irrégularités forment des sites de nucléation à l'intérieur du récipient, les sites de nucléation favorisant la formation de bulles au contact d'une boisson gazeuse. Le récipient comprend une couche d'émail revêtant la région choisie, une pluralité de grains d'émail disposés en surface de ladite couche d'émail et fixés à ladite couche d'émail, et un composé hydrophobe disposé sur une partie de la surface desdits grains d'émail.

Les grains d'émail revêtus du revêtement hydrophobe associés à la couche d'émail sur laquelle ils sont fixés forment des sites de nucléation. La tenue au lavage est excellente, notamment supérieure à 500 cycles en lave-verres, avec conservation du bullage sur récipient sec ou humide.

Dans un mode de réalisation, ladite couche d'émail présente une température de fusion inférieure à la température de fusion des grains d'émail. Les grains d'émail conservent au moins en partie la forme qu'ils présentaient avant la fixation à la ladite couche d'émail.

Dans un mode de réalisation, ladite couche d'émail présente une épaisseur comprise entre 5 et 100 $\mu$m, préférablement entre 10 et 25 $\mu$m. En dessous de 5 $\mu$m, il y a risque de fixation d'un nombre insuffisant de grains d'émail, notamment une densité surfacique insuffisante de grains d'émail. Au dessus de 100 $\mu$m, certains grains d'émail peuvent être enfoncés excessivement dans ladite couche d'émail. La plage préférée de 10 à 25 $\mu$m aboutit à un faible taux de grains d'émail non fixés, et à une rugosité favorable au bullage.

Dans un mode de réalisation, lesdits grains d'émail présentent une distribution granulométrique comprise entre 1 et 500 $\mu$m, plus préférablement 50 et 250 $\mu$m. En dessous de 1 $\mu$m, la manipulation des grains d'émail est difficile et leur surface couverte par la couche hydrophobe est moins résistante au lave-verres. Au dessus de 500 $\mu$m, une partie des bulles stagne au fond du récipient. La mousse est donc moins fournie. L'aspect du récipient diverge des usages en matière de boisson gazeuse, notamment avec une rugosité apparente à l'œil nu. La plage préférée de 50 à 250 $\mu$m aboutit à une densité surfacique correcte de grains d'émail et à un pourcentage de la surface occupée par les grains d'émail intéressant pour le bullage.

Dans un mode de réalisation, lesdits grains d'émail présentent une granulométrie telle que D10 soit compris entre 30 et 90 $\mu$m, D10 étant le diamètre en dessous duquel se situent 10% des grains en volume, D50 soit compris entre 100 et 145 $\mu$m, D50 étant le diamètre en dessous duquel se situent 50% des grains en volume, et D90 soit compris entre 150 et 250 $\mu$m, D90 étant le diamètre en dessous duquel se situent 90% des grains en volume. La proportion de fines et la proportion de gros grains est faible. La fixation observée est de bonne qualité et durable.

Dans un mode de réalisation, D10 est compris entre 35 et 50 $\mu$m, D50 est compris entre 105 et 120 $\mu$m et D90 est compris entre 160 et 190 $\mu$m. La perte de grains d'émail lors de la fixation est réduite.

Dans un mode de réalisation, lesdits grains d'émail présentent une granulométrie à répartition présentant un pic compris entre 80 et 200 $\mu$m, préférablement entre 100 et 130 $\mu$m. Le pic est unique. La rugosité offre un bullage satisfaisant.

Dans un mode de réalisation, le récipient est réalisé en verre sodo-calcique.

Dans un mode de réalisation, le récipient est réalisé en cristallin. Le cristallin comprend une somme de PbO, BaO, $K_2O$ et ZnO supérieure ou égale à 10% en masse.

Dans un mode de réalisation, le composé hydrophobe comprend du Si. Le composé hydrophobe est résistant à plus de 600°C.

Dans un mode de réalisation, l'émail des grains d'émail est sensiblement dépourvu de Pb, préférablement sans ajout volontaire de Pb. Les grains d'émail présentent une dureté et un point de fusion élevés.

L'invention de la Demanderesse selon la revendication 9 propose un procédé de fabrication de verre d'un récipient pour boisson présentant des irrégularités de surface dans une région choisie, les irrégularités formant des sites de nucléation à l'intérieur du récipient, les sites de nucléation favorisant la formation de bulles au contact d'une boisson gazeuse, comprend la dépose d'une couche d'émail revêtant la région choisie, puis la dépose d'une pluralité de grains d'émail en surface de ladite couche d'émail, et la cuisson de ladite couche d'émail et la fixation des grains d'émail à ladite couche d'émail par un même traitement thermique, les grains d'émail présentant un composé hydrophobe disposé sur une partie de la surface desdits grains d'émail.

Dans un mode de réalisation, la température maximale atteinte lors du traitement thermique est comprise entre la température de fusion de la couche d'émail et la température de fusion desdits grains d'émail. La température maximale atteinte peut être égale à 700°C.

Dans un mode de réalisation, les grains d'émail consistent en du givre réfractaire.

Dans un mode de réalisation, des grains d'émail bruts sont mélangés avec du polysilazane, le mélange est cuit fournissant un corps solide, et le corps solide est brisé pour retrouver sensiblement la granulométrie des grains d'émail d'origine. On entend ici par bruts, dépourvus de composé hydrophobe.

Dans un mode de réalisation, le mélange grains d'émail bruts et polysilazane est effectué dans une proportion comprise entre 8/1 et 15/1.

Dans un mode de réalisation, le mélange est cuit à une température comprise entre 150 et 200°C pendant une durée comprise entre 30 et 150 minutes.

Dans un mode de réalisation, le corps solide est brisé par broyage. Le broyage permet de désagglomérer le corps solide. La cuisson préalable peut provoquer une agglomération en un corps solide massif.

Dans un mode de réalisation, le broyat est passé par au moins un tamis. La granulométrie est maîtrisée.

Dans un mode de réalisation, le broyat, préférablement tamisé, est appliqué sur la couche d'émail.

Dans un mode de réalisation, l'application du broyat sur la couche d'émail est effectué par tampographie. Une étape de trempe est menée.

Dans un mode de réalisation, le composé hydrophobe est obtenu à partir de polysilazane.

Le récipient peut en outre comprendre un corps en verre. La transparence permet de visualiser l'apparition et le cheminement des bulles depuis le site de nucléation jusqu'à la surface de la boisson.

D'autres caractéristiques, détails et avantages de l'invention apparaîtront à la lecture de la description détaillée ci-après, et des dessins annexés, sur lesquels :

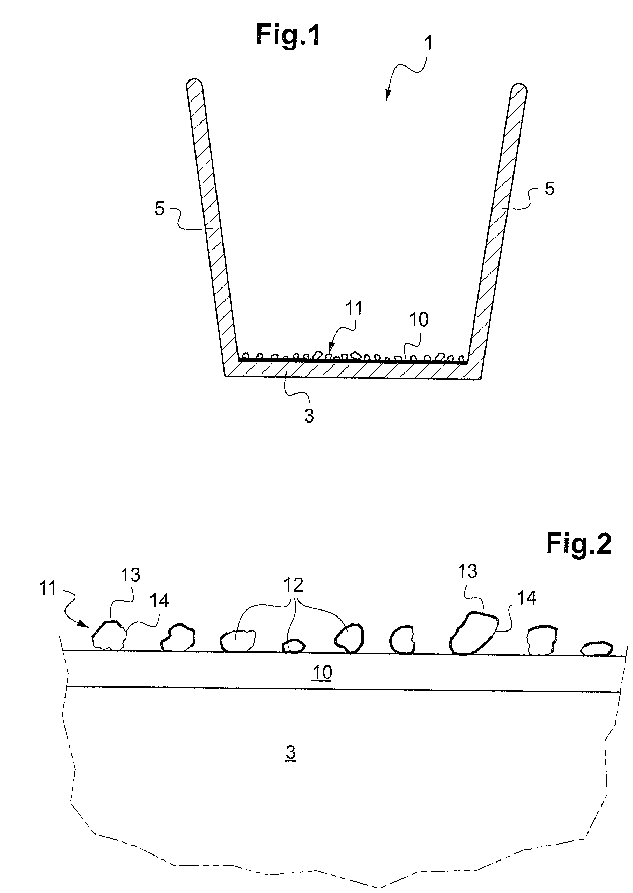

- la figure 1 est une vue en coupe d'un contenant,

- la figure 2 est une vue de détail de la figure 1,

- la figure 3 est une vue similaire à la figure 1 en présence d'une boisson gazeuse,

- la figure 4 est une vue de dessus à fort grossissement, et

- la figure 5 est une photographie comparative d'un mode de l'invention et d'un verre muni seulement de la couche d'email.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Dans un liquide alimentaire, le dioxyde de carbone ($CO_2$) dissous en phase liquide est le gaz vecteur du phénomène d'effervescence. La fréquence d'émission des bulles lors d'une dégustation, le grossissement des bulles dans le contenant et le nombre de bulles susceptibles de se former sont reliés à un certain nombre de paramètres physico-chimiques de la phase liquide et du contenant dans lequel on déguste.

Lorsqu'un gaz est mis en contact avec un liquide, une partie de ce gaz se dissout dans le liquide. Différents facteurs influencent la solubilité du gaz dans le liquide, en particulier la température et la pression. A l'équilibre, il existe une proportionnalité entre la concentration dans la phase liquide d'une espèce chimique i, notée $c_i$, et sa pression partielle en phase gazeuse Pi. La loi de Henry s'écrit :

$$c_i = k_H P_i \qquad [1]$$

La constante de proportionnalité $k_H$ s'appelle la constante de Henry. Elle dépend fortement du gaz et du liquide considérés, ainsi que de la température.

Sous la pression atmosphérique normale $P_o \approx 1$ bar, compte tenu de la solubilité du $CO_2$ dans une bière à 4 °C qui vaut $k_H \approx 2,6$ g/L/bar, ladite bière est susceptible de dissoudre environ 2,6 g/L de $CO_2$.

Lorsqu'une substance chimique i est à l'équilibre de part et d'autre d'une interface gaz/liquide, sa concentration dans le liquide vérifie la loi de Henry. On dit alors que le liquide est saturé vis-à-vis de cette substance. En l'occurrence, saturation signifie équilibre.

Lorsque la concentration $c_L$ en une substance chimique i dans un liquide est supérieure à ce qui est prévu par la loi de Henry, le liquide est sursaturé vis-à-vis de cette substance. Pour quantifier cette situation hors équilibre, on définit le coefficient de sursaturation Si comme l'excès relatif de concentration dans un liquide en une substance i par rapport à la concentration de référence, notée co (choisie comme la concentration d'équilibre de cette substance sous une pression partielle égale à la pression qui règne dans le liquide $P_L$). On définit donc le coefficient de sursaturation Si sous la forme suivante :

$$S_i = (c_i - c_0)/c_0 \qquad [2]$$

Lorsqu'un liquide est sursaturé vis-à-vis d'une substance chimique, on a $S_i > 0$. Le liquide évacue une partie de son contenu en cette substance chimique pour retrouver un nouvel état d'équilibre qui vérifie la loi de Henry.

En conditions de dégustation, dans un contenant, la pression qui règne dans le liquide est quasiment identique à la pression ambiante. Compte tenu de la faible hauteur de liquide qui n'excède pas 20 à 25 cm, l'effet de la surpression hydrostatique qui règne au fond du contenant est négligeable par rapport à la pression atmosphérique. A une température de 4 °C, on peut alors en déduire la concentration à l'équilibre comme étant égale à :

$$c_0 = k_H P_L \approx k_H P_0 \approx 2,6 \text{ g/L} \qquad [3]$$

Les bières ne disposent pas toutes de la même concentration en $CO_2$ dissous. Certaines sont faiblement chargées à hauteur de 3-4 g/L, alors que d'autres sont fortement chargées, jusqu'à 7-8 g/L. Leurs coefficients de sursaturation respectifs vis-à-vis du $CO_2$ dissous ne seront donc pas les mêmes. Dans le cas d'une bière moyenne, chargée à environ 5 g/L. Son coefficient de sursaturation (à 4 °C) en appliquant l'équation [2] :

$$S_{CO2} = (c_i - c_0)/c_0 \approx (5-2,6)/2,6 \approx 0,9 \qquad [4]$$

Pour comparaison (toujours à 4 °C), les eaux fortement gazeuses (de type Badoit Rouge) présentent des coefficients de sursaturation de l'ordre de 1,3, alors que les vins de Champagne (encore jeunes) présentent des coefficients nettement plus élevés, de l'ordre de 3,4. D'une manière générale, plus le coefficient de sursaturation d'un liquide chargé en $CO_2$ dissous est élevé, plus la cinétique d'échappement du gaz carbonique dissous qui en résulte sera intense afin de rétablir l'équilibre de Henry. Cependant, il a été observé que la sursaturation d'un liquide en gaz dissous n'est pas nécessairement synonyme de formation de bulles et donc d'effervescence.
En effet, aux valeurs de sursaturation des bières, la formation de bulles nécessite la présence de poches de gaz dans le milieu, dont le rayon de courbure rc dépasse une valeur dite critique définie comme suit :

$$r_C = 2 \gamma/P_o S \qquad [5]$$

où y est la tension de surface du liquide, $P_o$ est la pression ambiante et S est le coefficient de sursaturation de la phase liquide en $CO_2$.
A la pression atmosphérique normale de 1 bar et à 4 °C, dans le cas d'une bière dont la tension de surface vaut typiquement 45 mN/m et le coefficient de sursaturation environ 0,9, l'équation précédente fait apparaître un rayon critique de l'ordre de 1 $\mu$m en dessous duquel la formation de bulles n'a pas lieu.
Pour faire apparaître et grossir des bulles de $CO_2$ dans une bière, le milieu contient en son sein des microbulles de gaz dont les rayons sont supérieurs à ce rayon critique de l'ordre de 1 $\mu$m. On parle de nucléation hétérogène non-classique (par opposition aux nucléations dites classiques qui concernent la formation spontanée, ex nihilo, de bulles dans un liquide fortement sursaturé). Les nucléations classiques requièrent des coefficients de sursaturation en gaz dissous très importants (>100), incompatibles avec les boissons gazeuses.
La question se pose alors de l'origine des germes gazeux qui sont les catalyseurs de l'effervescence dans un contenant.
La Demanderesse a observé in situ, le mode d'apparition des bulles de bières servies dans des verres lisses n'ayant donc pas subi de traitement particulier. Dans la grande majorité des cas, ce sont des poches d'air piégées dans des particules adsorbées à la surface du verre qui jouent le rôle de site de nucléation. Le rayon de ces poches de gaz piégées au cœur des particules (le plus souvent des fibres de cellulose) dépasse en général le rayon critique requis pour permettre la diffusion du $CO_2$ dissous et donc la production répétitive de bulles dans le verre.
Le rayon critique de nucléation tient compte de la concentration de la bière en $CO_2$ dissous, cf. équations [4] et [5]. Or, après le service, ladite concentration n'est plus la même que celle initialement présente. Le service est une étape critique. En effet, le versement dans le contenant génère d'importantes turbulences qui accélèrent l'échappement du gaz carbonique dissous. Plus la bière est froide, plus le gaz carbonique dissous est conservé dissous au moment du service. En effet, la bière est d'autant plus visqueuse qu'elle est froide. Or, la vitesse de diffusion du $CO_2$ dissous hors de la bière est d'autant plus rapide que la viscosité de la bière est faible. De plus, les turbulences du versement s'atténuent d'autant plus efficacement que la bière est visqueuse. En conséquence, plus la bière est servie froide, meilleure est la conservation du gaz carbonique dissous pendant le service.

- Pour la bière St Omer, servie à 4 °C, dans un verre lisse, on trouve des rayons critiques de 1,02 $\pm$ 0,02 $\mu$m.

- Pour la bière Carlsberg, servie à 4 °C, dans un verre lisse, on trouve un rayon critique de 1,05 $\pm$ 0,02 $\mu$m.

Par ailleurs, il a été établi que le flux de bulles, c'est-à-dire le nombre de bulles par seconde est proportionnel au carré de la température, à la concentration en $CO_2$ dissous dans le liquide, et inversement proportionnel à la viscosité dynamique du liquide (en kg/m/s).

Sur un contenant, selon un mode de réalisation, rempli de bière, il a été constaté une hauteur de mousse sensiblement conservée que le contenant soit sec à température ambiante ou humide à température de sortie de lave-verre.

Par ailleurs, la Demanderesse a mené des essais comparant un verre selon un mode de réalisation et un verre selon FR 3 008 295. Les deux verres présentent des formes semblables : verre sans pied, parfois dénommé gobelet, à fond plus épais que le bord, de hauteur environ trois fois supérieure au diamètre. Cette forme de verre se retrouve pour les marques Amstel®, Kronenbourg®, Heineken®, Foster's® ou encore Carlsberg®, etc. Chaque verre sec à température ambiante est rempli de bière à 4-5°C. La bière y est laissée pendant 10 minutes. Puis chaque verre est vidé, rincé à l'eau claire et placé dans le même lave-verres.

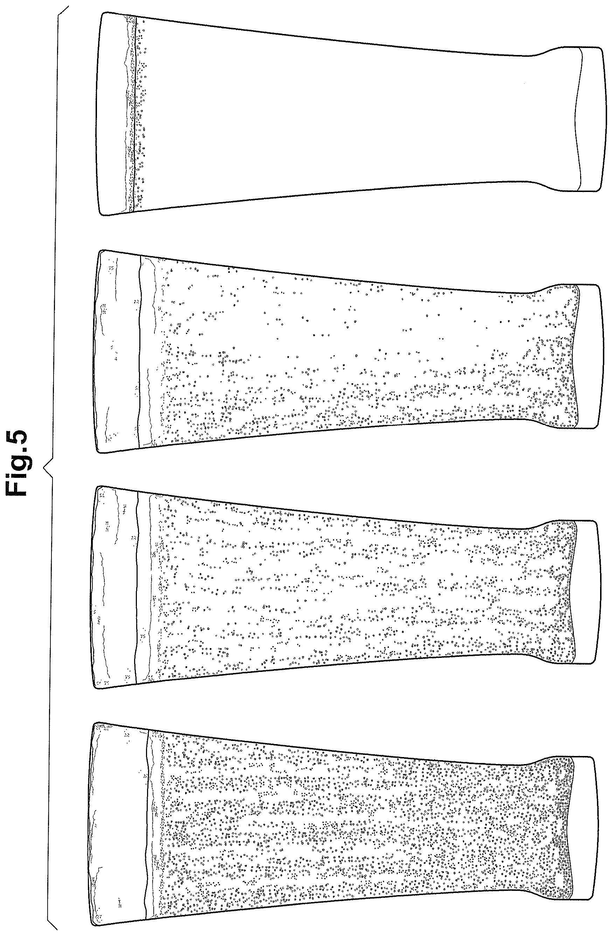

Chaque verre propre est sorti du lave-verres et rempli du volume de la même bière de Saint Omer® pour lequel il est prévu, en continuité de mouvement. La hauteur de mousse est observée pendant 5 minutes après remplissage. Comme montré sur la figure 5, la hauteur de mousse dans le verre muni seulement de la couche d'email disposé à droite est plus faible que les verres selon un mode de réalisation. Dans les trois verres selon un mode de réalisation disposés à gauche, la hauteur de mousse est satisfaisante. Dans l'ordre en partant de la gauche, sont montrés un verre après 300 lavages, un verre après 100 lavages et un verre neuf.. Les trois hauteurs de mousse sont proches ce qui montre une bonne résistance du verre selon l'invention au lavage.

La qualité du bullage est observée. La mousse se maintient pendant 10 minutes environ.

La présence de la couche hydrophobe empêche l'eau de venir remplir les anfractuosités et permet donc aux sites de nucléations de fonctionner de la même maniére que si le verre était sec.

Ce qui a été testé ci-dessus avec des bières chargées majoritairement en gaz carbonique, s'applique aussi aux bières chargées majoritairement en azote, telle la *Guinness® Draught,* ou servies sous pression d'azote.

Un avantage est que l'application de la couche hydrophobe s'effectue sur le givre d'émail, donc avant que le verre ne soit concerné. L'interférence avec un procédé conventionnel de fabrication du verre est réduit. En d'autres termes, un lot de givre d'émail revêtu peut être préparé à l'avance et servir pour des verres de formes différentes, de taille différentes, destinés à des bières différentes.

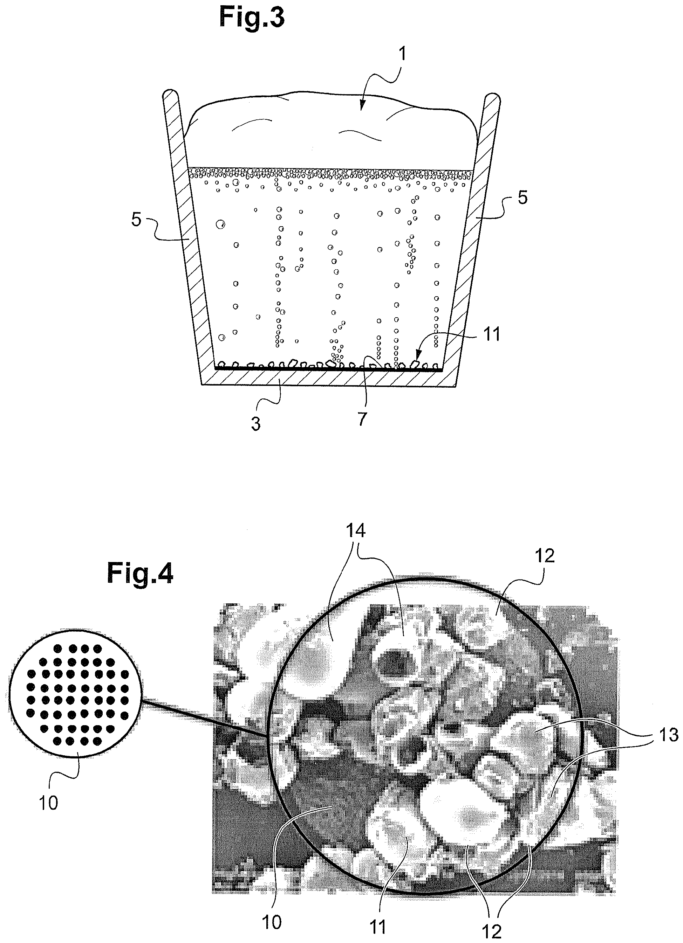

Un tel contenant 1 est représenté sur les figures. Le contenant 1 prend, ici, la forme d'un verre à boire. Dans des variantes, le contenant 1 prend la forme d'une chope à bière, d'une flûte à champagne, ou tout autre contenant adapté pour accueillir une boisson gazeuse. Le procédé décrit dans la suite s'applique à la plupart des récipients pour boisson gazeuse ou boisson gazeuse pour lesquels la maîtrise de l'effervescence présente un intérêt, voir figure 3.

Le contenant 1 est, ici, constitué d'un fond 3 sensiblement plan et d'une paroi 5 latérale de forme sensiblement tronconique. Le contenant 1 est, ici, axisymétrique. Dans l'exemple décrit ici, le fond 3 et la paroi 5 forment un corps monobloc. Le corps présente une surface intérieure de fond et une surface intérieure de bord. Les surfaces intérieures sont destinées à être au contact de la boisson lors de l'utilisation du contenant 1.

Le contenant 1 peut être obtenu par des techniques de fabrication connues en tant que telles, par exemple par pressage, soufflage et/ou par centrifugation. En sortie, l'intérieur du contenant 1 est sensiblement lisse et uniforme. Le contenant 1 est dit brut.

Dans l'exemple décrit dans la suite, la surface intérieure de fond 3 est revêtue par une couche d'émail 10. D'autres parties peuvent être revêtues de même en fonction de la localisation souhaitée des bulles dans le contenant 1 achevé, ou encore le fond 3 peut n'être revêtu qu'en partie. La surface intérieure de bord est généralement non revêtue.

Dans un mode de réalisation, la couche d'émail 10 est un émail réfractaire. L'émail est sensiblement dépourvu de plomb, plus précisément dépourvu d'addition volontaire de plomb. L'émail de la couche d'émail 10 peut être selon FR 2 825 999 auquel le lecteur est invité à se référer.

En option, il peut être ajouté au plus 4% de pigment en masse dans le mélange avant la trempe. On peut, par exemple, ajouter un pigment Iriodin® à base de mica et d'oxyde de titane. Un pigment comprenant 51 à 58% de mica, 42 à 48% de $TiO_2$ et au plus 1% de $SnO_2$ ou 66 à 74% de mica, 26 à 33% de $TiO_2$, présence d'oxyde de fer possible, et au plus 1% de $SnO_2$ peut convenir. La présence de mica et d'oxyde de titane sous forme de petites particules très réfractaires augmente la rugosité de la couche d'émail 10.

La couche d'émail 10 présente une épaisseur comprise entre 5 et 100 $\mu$m, préférablement entre 10 et 25 $\mu$m.

La couche d'émail 10 est adhérente à la surface intérieure de fond 3. L'adhésion est obtenue en portant le verre à une température élevée dans un environnement de température comprise entre 600 et 700° C. La couche d'émail 10 peut présenter une plage de température de transformation comprise entre 460 et 500°C, une plage de température de ramollissement comprise entre 500 et 540°C, la température de ramollissement étant supérieure à la température de transformation.

Sur la couche d'émail 10 est fixé un givre d'émail 11. Le givre d'émail 11 est granulaire. Le givre d'émail 11 est déposé sur la couche d'émail 10, notamment par tampographie. Une trempe provoque un ramollissement de la couche d'émail 10 et une fixation du givre d'émail 11 à la couche d'émail 10. Un léger enfoncement du givre d'émail 11 dans la couche d'émail 10 est possible.

Le givre d'émail 11 comprend des grains d'émail 12 revêtus d'une couche hydrophobe 13. Les grains d'émail 12 sont composés d'un émail plus réfractaire que la couche d'émail 10. Les grains d'émail 12 peuvent être constitués d'un émail habituellement utilisé pour revêtir une céramique alimentaire, l'émail étant alors fondu pour former une couche transparente. L'émail des grains peut être fourni par Ferro®. Au contraire, selon l'invention, l'émail des grains n'est pas fondu. La forme des grains d'émail 12 est globalement conservée. Le caractère granulaire est conservé. Les grains d'émail 12 sont portés pendant une durée de traitement à une température de traitement inférieure à la température à laquelle lesdits grains d'émail se ramolliraient ou adhéreraient les uns aux autres pendant la même durée de traitement.

Le givre d'émail 11 peut comprendre en masse : $SiO_2$ 40 à 60%, $Al_2O_3$ 2 à 6%, $B_2O_3$ 15 à 30%, $Li_2O$ 2 à 6%, $Na_2O$ 5 à 10%, $K_2O$ 2 à 6%, MgO moins de 1%, CaO moins de 1%, $ZrO_2$ 2 à 6%. D'autres éléments peuvent être présents à l'état de traces.

Dans une variante, le givre d'émail 11 peut comprendre en masse : $SiO_2$ 40 à 60%, $Al_2O_3$ 10% au plus, $B_2O_3$ 15 à 40%, $Li_2O$ 2 à 6%, $Na_2O$ 10% au plus, $K_2O$ 6% au plus, MgO moins de 1%, BaO 6% au plus, CaO 10% au plus, $ZrO_2$ 6% au plus, $La_2O_3$ 6% au plus, $F_2$ moins de 2%. D'autres éléments peuvent être présents à l'état de traces. Plus précisément, dans une première réalisation, le givre d'émail 11 comprend en masse : $SiO_2$ 40 à 60%, $Al_2O_3$ 2 à 6%, $B_2O_3$ 15 à 30%, $Li_2O$ 2 à 6%, $Na_2O$ 5 à 10%, $K_2O$ 2 à 6%, MgO moins de 1%, BaO pas d'addition volontaire, CaO 1% au plus, $ZrO_2$ 2 à 6%, $La_2O_3$ pas d'addition volontaire, $F_2$ pas d'addition volontaire.

Dans une deuxième réalisation, le givre d'émail 11 comprend en masse $SiO_2$ 40 à 60%, $Al_2O_3$ 2% au plus, $B_2O_3$ 20 à 40%, $Li_2O$ 2 à 6%, $Na_2O$ 1% au plus, $K_2O$ 1% au plus, MgO pas d'addition volontaire, BaO pas d'addition volontaire, CaO 5 à 10%, $ZrO_2$ pas d'addition volontaire, $La_2O_3$ pas d'addition volontaire, $F_2$ pas d'addition volontaire.

Dans une troisième réalisation, le givre d'émail 11 comprend en masse $SiO_2$ 40 - 60%, $Al_2O_3$ 5 à 10%, $B_2O_3$ 15 à 30%, $Li_2O$ 2 à 6%, $Na_2O$ 1 à 5%, $K_2O$ 2 à 6%, MgO moins de 1%, BaO 2 à 6%, CaO moins de 1%, $ZrO_2$ 2 à 6%, $La_2O_3$ 2 à 6%, $F_2$ moins de 2%.

La plage de température de transformation est comprise entre 450 et 550°C. La plage de température de transformation voit le passage du verre d'un état viscoélastique à un état vitreux solide. La température de transformation peut être estimée au dilatomètre. La plage de température de ramollissement est comprise entre 600 et 680°C, plus particulièrement entre 640 et 650°C. La température de transformation peut être estimée par microscopie avec platine chauffante. La température de transformation peut être comprise entre 500 et 520°C.

Le givre d'émail 11 est porté à une température nettement inférieure à la température normale d'utilisation pour émailler une pièce de céramique. La trempe peut être effectuée à une température à laquelle la couche d'émail 10 est nettement ramollie, voire présente un début de fusion tandis que le givre d'émail 11 conserve sa forme en étant éloigné de son point de fusion. La trempe peut être effectuée à une température comprise entre 600 et 700°C, par exemple 650°C à +/- 20°C près.

On peut prévoir un écart d'au moins 20°C entre les températures de ramollissement ou entre les températures de transformation du givre d'émail 11 et de la couche d'émail 10, préférablement un écart d'au moins 100°C entre les températures de ramollissement.

La couche hydrophobe 13 recouvre partiellement, voire totalement, les grains d'émail 12. Les grains d'émail 12 peuvent présenter des zones nues 14. La couche hydrophobe 13 contient du polysilazane. Un précurseur est déposé sur les grains d'émail 12 alors en poudre. Le précurseur peut comprendre du Durazane® 1800 de Merck. Le précurseur est mélangé au givre dans une proportion massique de l'ordre 1/10, notamment 1/8 à 1/15. Le précurseur est alors en surface des grains d'émail du givre. Le mélange est porté à 150-200°C, par exemple 180°C. La cuisson peut durer 30 à 150 minutes, par exemple 1 heure. La cuisson peut avoir lieu dans une étuve. A la sortie de la cuisson, le mélange se présente sous la forme d'une galette agglomérée. La galette est broyée. Le broyage permet de retrouver un produit pulvérulent. Les grains d'émail 12 sont alors recouverts de la couche hydrophobe 13, les uns en totalité, les autres en partie.

Le broyat est tamisé afin d'éliminer les imbroyés et d'éventuelles fines. Les imbroyés peuvent être recyclés en broyage ou vers une ligne de production d'émail. Les fines peuvent être recyclées vers une ligne de production d'émail. On peut prévoir un tamis fin à 40 $\mu$m, préférablement 50 $\mu$m, et un tamis gros à 500 $\mu$m, préférablement 250 $\mu$m. Le broyat tamisé peut être préparé à l'avance. Le broyat tamisé est adapté à des récipients variés, en verre ou en grès.

Le broyat tamisé est appliqué sur une région choisie du contenant 1, en général le fond du contenant 1. L'application peut être effectuée par tampographie. Puis le contenant 1 est passé dans un four de trempe. La trempe fixe le broyat tamisé à la couche d'émail 10. Le broyat fixé à la couche d'émail 10 forme des irrégularités de surface. La rugosité obtenue dépend de la quantité de givre, exprimée en masse par unité de surface ou en nombre de grains par unité de surface, et de la granulométrie du givre. La couche hydrophobe est conservée à la trempe.

Sur la figure 4, un échantillon de couche d'émail 10, apparaissant en arrière plan, a été revêtu avec du givre 11. Les zones hydrophobes et non hydrophobes n'apparaissent pas avec le type de représentation choisi. Le grossissement est de l'ordre de 100.

Les irrégularités de surface forment des sites de nucléation à l'intérieur du récipient, ici au fond 3. Les sites de nucléation favorisent la formation de bulles au contact d'une boisson carbonatée et/ou azotée.

Sur un verre ainsi traité, le bullage de la bière à l'état sec et le bullage de la bière à l'état chaud et humide sont quasi identiques. L'invention s'applique en particulier aux récipients en verre sodo-calcique ou en cristallin, notamment en cristallin sans apport volontaire de Pb. Un tel cristallin présente, en général, une teneur en Pb inférieure à 0,5% en masse.

L'invention ne se limite pas aux exemples de procédés et de récipients décrits ci-avant, seulement à titre d'exemple, mais elle englobe toutes les variantes que pourra envisager l'homme de l'art dans le cadre des revendications ci-après.

**Revendications**

1. Récipient (1) à base de verre ou de grès pour boisson présentant des irrégularités de surface dans une région choisie, les irrégularités formant des sites de nucléation à l'intérieur du récipient, les sites de nucléation favorisant la formation de bulles au contact d'une boisson gazeuse, le récipient comprenant une couche d'émail (10) revêtant la région choisie, **caractérisé en ce qu'**une pluralité de grains d'émail (12) sont disposés en surface de ladite couche d'émail (10) et sont fixés à ladite couche d'émail (10), et un composé hydrophobe (13) est disposé sur une partie de la surface desdits grains d'émail (12).

2. Récipient selon la revendication 1, dans lequel ladite couche d'émail (10) présente une température de fusion inférieure à la température de fusion des grains d'émail (12).

3. Récipient selon la revendication 1 ou 2, dans lequel ladite couche d'émail (10) présente une épaisseur comprise entre 5 et 100 $\mu$m, préférablement entre 10 et 25 $\mu$m.

4. Récipient selon l'une des revendications précédentes, dans lequel lesdits grains d'émail (12) présentent une distribution granulométrique comprise entre 1 et 500 $\mu$m, plus préférablement entre 50 et 250 $\mu$m.

5. Récipient selon l'une des revendications précédentes, dans lequel lesdits grains d'émail (12) présentent une granulométrie telle que D10 soit compris entre 30 et 90 $\mu$m, D10 étant le diamètre en dessous duquel se situent 10% des grains en volume, D50 soit compris entre 100 et 145 $\mu$m, D50 étant le diamètre en dessous duquel se situent 50% des grains en volume, et D90 soit compris entre 150 et 250 $\mu$m, D90 étant le diamètre en dessous duquel se situent 90% des grains en volume, préférablement D10 compris entre 35 et 50 $\mu$m, D50 compris entre 105 et 120 $\mu$m, et D90 compris entre 160 et 190 $\mu$m.

6. Récipient selon l'une des revendications précédentes, dans lequel lesdits grains d'émail (12) présentent une granulométrie à répartition présentant un pic compris entre 80 et 200 $\mu$m, préférablement entre 100 et 130 $\mu$m.

7. Récipient selon l'une des revendications précédentes, dans lequel le récipient (1) est réalisé en verre sodo-calcique ou en cristallin.

8. Récipient selon l'une des revendications précédentes, dans lequel le composé hydrophobe comprend du Si et l'émail des grains d'émail (12) est sensiblement dépourvu de Pb, préférablement sans ajout volontaire de Pb.

9. Procédé de fabrication d'un récipient (1) pour boisson présentant des irrégularités de surface dans une région choisie, les irrégularités formant des sites de nucléation à l'intérieur du récipient, les sites de nucléation favorisant la formation de bulles au contact d'une boisson gazeuse, dans lequel on dépose une couche d'émail (10) revêtant la région choisie, puis on dépose une pluralité de grains d'émail (12) en surface de ladite couche d'émail (10), et on cuit ladite couche d'émail (10) et on fixe les grains d'émail (12) à ladite couche d'émail (10) par un même traitement thermique, les grains d'émail (12) présentant un composé hydrophobe (13) disposé sur une partie de la surface desdits grains d'émail (12).

10. Procédé selon la revendication précédente, dans lequel le traitement thermique est effectué à une température comprise entre la température de fusion de la couche d'émail (10) et la température de fusion desdits grains d'émail (12).

**Patentansprüche**

1. Behälter (1) auf der Basis von Glas oder von Steinzeug für ein Getränk, der in einer ausgewählten Region Oberflächenunregelmäßigkeiten aufweist, wobei die Unregelmäßigkeiten Keimbildungsstellen im Inneren des Behälters bilden, wobei die Keimbildungsstellen die Bildung von Blasen im Kontakt mit einem gashaltigen Getränk fördern, wobei der Behälter eine Emailleschicht (10) umfasst, die die ausgewählte Region bedeckt, **dadurch gekennzeichnet, dass** eine Vielzahl von Emaillekörnern (12) auf der Oberfläche der Emailleschicht (10) angeordnet sind und an der Emailleschicht (10) befestigt sind, und eine hydrophobe Verbindung (13) auf einem Teil der Oberfläche der Emaillekörner (12) angeordnet ist.

2. Behälter nach Anspruch 1, wobei die Emailleschicht (10) eine Schmelztemperatur aufweist, die unter der Schmelztemperatur der Emaillekörner (12) liegt.

3. Behälter nach Anspruch 1 oder 2, wobei die Emailleschicht (10) eine Dicke aufweist, die zwischen 5 und 100 $\mu$m, vorzugsweise zwischen 10 und 25 $\mu$m liegt.

4. Behälter nach einem der vorangehenden Ansprüche, wobei die Emaillekörner (12) eine granulometrische Verteilung aufweisen, die zwischen 1 und 500 $\mu$m, vorzugsweise zwischen 50 und 250 $\mu$m liegt.

5. Behälter nach einem der vorangehenden Ansprüche, wobei die Emaillekörner (12) eine Korngröße aufweisen, die derart ist, dass D10 zwischen 30 und 90 $\mu$m liegt, wobei D10 der Durchmesser ist, unterhalb dem sich 10 % der Körner nach Volumen befinden, D50 zwischen 100 und 145 $\mu$m liegt, wobei D50 der Durchmesser ist, unterhalb dem sich 50 % der Körner nach Volumen befinden, und D90 zwischen 150 und 250 $\mu$m liegt, wobei D90 der Durchmesser ist, unterhalb dem sich 90 % der Körner nach Volumen befinden, wobei vorzugsweise D10 zwischen 35 und 50 $\mu$m liegt, D50 zwischen 105 und 120 $\mu$m liegt und D90 zwischen 160 und 190 $\mu$m liegt.

6. Behälter nach einem der vorangehenden Ansprüche, wobei die Emaillekörner (12) eine Verteilungsgranulometrie aufweisen, die eine Spitze aufweist, die zwischen 80 und 200 $\mu$m, vorzugsweise zwischen 100 und 130 $\mu$m liegt.

7. Behälter nach einem der vorangehenden Ansprüche, wobei der Behälter (1) aus Natronkalk- oder aus Kristallglas hergestellt ist.

8. Behälter nach einem der vorangehenden Ansprüche, wobei die hydrophobe Verbindung Si umfasst und die Emaille der Emaillekörner (12) im Wesentlichen ohne Pb, vorzugsweise ohne absichtlich hinzugefügtes Pb ist.

9. Verfahren zur Herstellung eines Behälters (1) für ein Getränk, der in einer ausgewählten Region Oberflächenunregelmäßigkeiten aufweist, wobei die Unregelmäßigkeiten Keimbildungsstellen im Inneren des Behälters bilden, bei dem die Keimbildungsstellen die Bildung von Blasen im Kontakt mit einem gashaltigen Getränk fördern, wobei eine Emailleschicht (10) aufgebracht wird, die die ausgewählte Region bedeckt, dann eine Vielzahl von Emaillekörnern (12) auf die Oberfläche der Emailleschicht (10) aufgebracht werden und die Emailleschicht (10) gebrannt wird und die Emaillekörner (12) an die Emailleschicht (10) durch eine gleiche thermische Behandlung befestigt werden, wobei die Emaillekörner (12) eine hydrophobe Verbindung (13) aufweisen, die auf einem Teil der Oberfläche der Emaillekörner (12) aufgebracht ist.

10. Verfahren nach vorangehendem Anspruch, wobei die thermische Behandlung bei einer Temperatur durchgeführt wird, die zwischen der Schmelztemperatur der Emailleschicht (10) und der Schmelztemperatur der Emaillekörner (12) liegt.

**Claims**

1. A container (1) made of glass or stoneware for a beverage having surface irregularities in a chosen region, the irregularities forming nucleation sites inside the container, the nucleation sites promoting the formation of bubbles in contact with a carbonated beverage, the container comprising an enamel layer (10) coating the chosen region, **characterised in that** a plurality of enamel grains (12) are arranged at the surface of said enamel layer (10) and are attached to said enamel layer (10), and a hydrophobic compound (13) is arranged on a part of the surface of said enamel grains (12).

2. The container according to claim 1, wherein said enamel layer (10) has a melting temperature lower than the melting temperature of the enamel grains (12).

3. The container according to claim 1 or 2, wherein said enamel layer (10) has a thickness of between 5 and 100 $\mu$m, preferably between 10 and 25 $\mu$m.

4. The container according to one of the preceding claims, wherein said enamel grains (12) have a particle size distribution of between 1 and 500 $\mu$m, more preferably between 50 and 250 $\mu$m.

5. The container according to one of the preceding claims, wherein said enamel grains (12) have a particle size such that D10 is between 30 and 90 $\mu$m, D10 being the diameter below which are 10% of the grains by volume, D50 is between 100 and 145 $\mu$m, D50 being the diameter below which are 50% of the grains by volume, and D90 is between 150 and 250 $\mu$m, D90 being the diameter below which are 90% of the grains by volume, preferably D10 being between 35 and 50 $\mu$m, D50 being between 105 and 120 $\mu$m, and D90 being between 160 and 190 $\mu$m.

6. The container according to one of the preceding claims, wherein said enamel grains (12) have a particle size distribution having a peak of between 80 and 200 $\mu$m, preferably between 100 and 130 $\mu$m.

7. The container according to one of the preceding claims, wherein the container (1) is made of soda-lime glass or crystalline glass.

8. The container according to one of the preceding claims, wherein the hydrophobic compound comprises Si and the enamel of the enamel grains (12) is substantially free of Pb, preferably without deliberate addition Of Pb.

9. A method for manufacturing a beverage container (1) having surface irregularities in a chosen region, the irregularities forming nucleation sites inside the container, the nucleation sites promoting the formation of bubbles in contact with a carbonated beverage, wherein an enamel layer (10) coating the chosen region is deposited, then a plurality of enamel grains (12) are deposited on the surface of said enamel layer (10), and the enamel layer (10) is cooked and the enamel grains (12) are attached to said enamel layer (10) by a same heat treatment, the enamel grains (12) having a hydrophobic compound (13) arranged on a part of the surface of said enamel grains (12).

10. The method according to the preceding claim, wherein the heat treatment is carried out at a temperature between the melting temperature of the enamel layer (10) and the melting temperature of said enamel grains (12).

# Fig.1

# Fig.2

# Fig.3

# Fig.4

Fig.5

EP 3 801 142 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0703743 A
- FR 2531891
- WO 2010048488 A
- FR 3008295
- FR 1753464
- FR 2825999

**Littérature non-brevet citée dans la description**

- **LIGER-BELAIR, G.** The physics behind the fizz in champagne and sparkling wines. *European Physical Journal: Special Topics,* 2012, vol. 201, 1-88
- **LIGER-BELAIR, G.** La physique des bulles de champagne. *Annales de Physique (Paris),* 2002, vol. 27 (4), 1-106
- **LIGER-BELAIR, G. ; CONREUX, A. ; VILLAUME, S. ; CILINDRE, C.** Monitoring the losses of dissolved carbon dioxide from laser-etched champagne glasses. *Food Research International,* 2013, vol. 54, 516-522
- **LIGER-BELAIR, G. ; VOISIN, C. ; JEANDET, P.** Modeling non-classical heterogeneous bubble nucleation from cellulose fibers: Application to bubbling in carbonated beverages. *Journal of Physical Chemistry B,* 2005, vol. 109, 14573-14580
- **LIGER-BELAIR, G. ; PARMENTIER, M. ; JEANDET, P.** Modeling the kinetics of bubble nucleation in champagne and carbonated beverages. *Journal of Physical Chemistry B,* 2006, vol. 110, 21145-21151
- **LIGER-BELAIR, G.** How many bubbles in your glass of bubbly?. *Journal of Physical Chemistry B,* 2014, vol. 118, 3156-3163
- **LIGER-BELAIR, G. ; BOURGET, M. ; VILLAUME, S. ; JEANDET, P. ; PRON, H. ; POLIDORI, G.** On the losses of dissolved CO2 during champagne serving. *Journal of Agricultural and Food Chemistry,* 2010, vol. 58, 8768-8775